# EUROPÄISCHE PATENTSCHRIFT

(11) **EP 3 470 186 B1**
(45) Veröffentlichungstag und Bekanntmachung des Hinweises auf die Patenterteilung: **19.06.2024**
(21) Anmeldenummer: 17195949.7
(22) Anmeldetag: 11.10.2017
(51) Int. Cl.: B23B 5/16, B26D 3/16, B26D 3/28, B23D 21/04, B26D 1/36

(54) **VERFAHREN UND VORRICHTUNG ZUM ABISOLIEREN VON VORISOLIERTEN ROHRLEITUNGEN**
METHOD AND DEVICE FOR STRIPPING PRE-INSULATED PIPES
PROCÉDÉ ET DISPOSITIF DE DÉNUDAGE DES CONDUITS PRÉISOLÉS

(43) Veröffentlichungstag der Anmeldung: 17.04.2019
(73) Patentinhaber: Georg Fischer Rohrleitungssysteme AG, 8201 Schaffhausen (CH)
(72) Erfinder: Breyer, Markus, 78315 Radolfzell (DE)
(74) Vertreter: Fenner, Seraina

(56) Entgegenhaltungen:
- EP-A2- 0 281 764
- DE-C1- 4 409 438
- DE-U1- 29 516 513
- JP-A- S57 163 525
- US-A1- 2017 252 831
- Georf Fischer Rohrleitungssysteme AG: "Bedienungsanleitung COOL-FIT 2.0/2.0M + 4.0 - Abisolier- und Schälwerkzeug d32 - d90 / d110 - d225", , 1. Januar 2018 (2018-01-01), XP055465582, CH-8201 Schaffhausen/Switzerland Gefunden im Internet: URL:http://www.gfps.com/appgate/ecat/commo n_flow/10002N/INT/en/109067/494492/507389/ P501157/product.html [gefunden am 2018-04-09]
- Georg Fischer Piping Systems Ltd: "COOL-FIT 2.0 foam removal and peeling tool - GF Piping Systems - English", You Tube, 18. August 2017 (2017-08-18), Seiten 1-2, XP054978236, Gefunden im Internet: URL:https://www.youtube.com/watch?v=26zyf2 GHM6w [gefunden am 2018-04-09]

## Beschreibung

Die Erfindung betrifft eine Vorrichtung gemäß dem Oberbegriff des Anspruchs 7 sowie ein Verfahren zum Abisolieren und Schälen von vorisolierten Rohrenden mittels eines solchen Schäl- und Schneidwerkzeugs, wobei das Verfahren folgende Schritte aufweist:
- festspannen des Schäl- und Schneidwerkzeugs mittels Spanneinheit am Innendurchmesser des Mediumsrohres,
- durchtrennen des Mantelrohres entlang dessen Aussenumfangs und gleichzeitiges einschneiden der Isolationsschicht mittels einer an einem Trägerarm angeordneten Schneidvorrichtung, wobei der Trägerarm um eine koaxial zur Spanneinheit angeordnete Führungseinheit rotiert wird,
- entfernen des Mantelrohres,
- abtrennen der Isolationsschicht von der äusseren Mantelfläche des Mediumsrohres mittels einer Trenneinheit, wobei das Abtrennen durch eine steigende Rotationsbewegung der Trenneinheit um die Führungsachse bzw. Rohrachse erzeugt wird, ausgehend der Rohrstirnseite bis hin zu einer vorgegebenen Rohrlänge bzw. Endposition,
- entfernen der abgetrennten Isolationsschicht vom Mediumsrohr,
- schälen und entfernen der Oxidschicht der Aussenmantelfläche des Mediumsrohres mittels einer Schäleinheit, wobei die Schälung in derselben oder in der entgegengesetzten Rotations- und Steigungsrichtung des Abtrennvorgangs ausgehend von der Endposition der vorgegebenen Rohrlänge oder der Stirnseite des Rohres, erfolgt.

Es handelt sich hierbei um ein Werkzeug und ein damit verbundenes Verfahren das für vorisolierte Rohrleitungen eingesetzt wird. Solche vorisolierten Rohrleitungen werden dort eingesetzt wo es eine gute Isolation des Mediums gegenüber den Umgebungsbedingungen benötigt, bspw. für den Transport von Kälteträgermedien in Kühlsystemen. Um das Medium transportierende Innenrohr bzw. das Mediumsrohr vorzugsweise aus Kunststoff ist eine Isolationsschicht vorzugweise aus geschäumtem Kunststoff angeordnet, wobei die Isolationsschicht von einer Aussenhaut oder einem Aussenrohr umgeben ist, welche vorzugsweise aus Kunststoff aber auch aus einem Metall gebildet ist und dem Schutz der Isolationsschicht dient. Solche Rohrleitungen müssen an ihren Enden abisoliert und das Mediumsrohr an der äusseren Mantelfläche geschält werden um mit Fittings oder weiteren Rohren verbunden werden zu können, da die Verbindung über das Mediumsrohr erfolgt um die Dichtheit zu gewährleisten.

Aus dem Stand der Technik sind solche Werkzeuge, die Schälen und Schneiden nur für Rohre bekannt, die zwar mehrschichtig sind aber keine Isolationsschicht aufweisen.

Die DE 295 16 513 U1 offenbart ein solches Werkzeug, wobei sich dieses nur für Rohre mit mehreren Mantelschichten aber nicht für Isolationsschichten eignet.

Vorisolierte Rohre wurden bisher in der Regel manuell, ohne entsprechendes Werkzeug, welches alle Schritte wie Abisolieren und Schälen des Mediumsrohres beinhaltend, abisoliert und für die Verbindung präpariert. Somit wurde zuerst die Einstecktiefe ausgemessen um zu bestimmen, wie weit die Isolationsschicht und das Aussenrohr entfernt werden muss. Dann wurde das Aussenrohr abgetrennt und danach die Isolationsschicht. Um eine gute Oberfläche für die Verschweissung des freigelegten Mediumsrohres mit bspw. einem daran zu verschweissenden Fitting zu gewährleisten, musste noch die Aussenfläche des Mediumrohres geschält werden.

Neben dem Nachteil der vielen einzelnen Schritte die durchzuführen sind, besteht auch der grosse Nachteil einer hohen Fehlerquelle. Durch das manuelle Abmessen der Einstecktiefe die abisoliert werden muss, ist es gut möglich, dass dabei ein Fehler erfolgt, wie auch beim Entfernen der Isolationsschicht, wodurch auch das Mediumsrohr ungewollt beschädigt werden kann.

Die EP 3 213 890 A1 zeigt ein Schäl- und Schneidwerkzeug welches zum Abisolieren von vorisolierten Rohrleitungen geeignet ist, wobei dieses nur für Rohrleitungen bis zu einem gewissen Rohrdurchmesser geeignet ist. Für grössere Rohrleitungen ist dieses Werkzeug nicht einsetzbar, da bei grossen Durchmessern ein Abisoliern und gleichzeitiges Schälen des Mediumsrohres nicht möglich ist aufgrund des hohen Drucks unter dem Isolationsmaterial könnte die Klinge nicht fortbewegt werden. Auch wenn die Schritte des Abisolierens bzw. Abtrennens der Isolationsschicht vom Mediumsrohr und des Schälens separat erfolgen ist der Druck unter der Isolationsschicht bei grossen Dimensionen dennoch zu hoch um einen Trennvorgang durchzuführen.

Es ist Aufgabe der Erfindung ein Verfahren und eine damit verbundene Vorrichtung vorzuschlagen, welches es ermöglicht mit möglichst geringem Zeitaufwand gross dimensionierte, vorisolierte Rohrleitungsenden abzuisolieren bzw. den hohen Druck unter der Isolationsschicht zu reduzieren um die Isolationsschicht vom Mediumsrohr lösen zu können, unter Verwendung einer manuell betätigbaren Vorrichtung.

Diese Aufgabe wird erfindungsgemäss dadurch gelöst, dass vor dem Durchtrennen des Mantelrohres entlang des Umfangs, ein Auftrennen des Mantelrohres und Einschneiden der Isolationsschicht parallel zur Rohrachse, vorzugsweise ausgehend von der Stirnseite des Rohres bis zu einer vorgegeben Rohrlänge, erfolgt.

Dies wird unter anderem auch mit der Schäl- und Schneidevorrichtung gemäß Anspruch 7 erreicht, wobei in einem Feststellring, welcher die Führungshülse umgibt, ein Gewindesegment das durch die Führungshülse hindurch ragt, verstellbar angeordnet ist, welches entsprechend seiner Position mit der Spindel greift und einen Vorschub bewirkt oder nicht greift. Dadurch wird ermöglicht, dass die unterschiedlichen Verfahrensschritte während des kompletten Abisolier- und Schälvorgangs mit einem Werkzeug durchgeführt werden können.

Das erfindungsgemässe Verfahren zum Abisolieren und Schälen von vorisolierten Rohrenden, insbesondere von Rohrleitungen mit einem Mediumsrohrinnendurchmesser von mindestens 110 mm mittels eines Schäl- und Schneidwerkzeugs, weist die Merkmale des Anspruchs 1 auf.

Mittels der am Schäl- und Schneidwerkzeug bzw. am Trägerarm angeordneten Schneidvorrichtung wird dann das Mantelrohr, welches die Isolationsschicht umgibt, entlang des Umfangs durchtrennt, zudem wird die Isolationsschicht eingeschnitten. Das Durchtrennen des Aussenmantels und das Einschneiden der Isolationsschicht erfolgt entlang des Umfangs des Mantelrohres mittels einer an einem Trägerarm angeordneten Schneidvorrichtung, wobei der Trägerarm um die koaxial zur Spanneinheit angeordnete Führungseinheit rotiert wird.

Vorzugsweise wird der zuvor parallel zur Rohrachse verlaufende Einschnitt bzw. die Auftrennung des Mantelrohrs und der Isolationsschicht mittels derselben Schneidvorrichtung durchgeführt wie die, die zur Durchtrennung des Mantelrohres entlang dessen Umfangs eingesetzt wird. Zur Ausführung der Auftrennung ist das Gewindesegment derart angeordnet, dass es nicht mit der Führungseinheit bzw. Spindel greift und sich dadurch das Schäl- und Schneidwerkzeug mithilfe der Führungshülse axial entlang der Führungseinheit verschieben lässt bis hin zum Endanschlag.

Die Führungseinheit ist koaxial vor der Spanneinheit angeordnet und mit dieser verbunden, wobei an der Führungseinheit, vorzugsweise an der auf der Führungseinheit angeordneten Führungshülse, eine Lagerung des Trägerarms angeordnet ist und somit dem Trägerarm sowie den daran befestigten Einheiten bzw. Vorrichtungen die Rotationsbewegung um das Rohrende ermöglicht wird. Anschliessend an den Durchtrennvorgang wird das durchtrennte Mantelrohr von der Isolationsschicht entfernt.

Durch eine steigende Rotationsbewegung der Trenneinheit um die Rohrachse bzw. um die Führungseinheit, die als Spindel ausgebildet ist, wird das Abtrennen der Isolationsschicht von der äusseren Mantelfläche des Mediumsrohres umgesetzt, wobei das Abtrennen, ausgehend der Stirnseite des Rohres bis hin zu einer vorgegeneben Rohrlänge bzw. Endposition erfolgt. Die Trenneinheit ist vorzugsweise auf der Führungshülse angeordnet, die wiederum mit dem Trägerarm verbunden ist, wodurch das manuelle Rotieren des Trägerarms die Drehbewegung auf die Trenneinheit überträgt. Durch die an der Trenneinheit angeordnete Klinge, welche vorzugsweise durch einfaches Aufstecken an der Trenneinheit anbringbar ist, die stirnseitig knapp oberhalb der äusseren Mantelfläche des Mediumsrohres in das Isolationsmaterial einsticht und durch eine Drehbewegung, die eine Steigung erfährt, wird die Isolationsschicht vom Mediumsrohr abgetrennt. Der Abtrennvorgang beginnt stirnseitig des Rohrendes und erstreckt sich bis zu einer Endposition über eine vordefinierte Rohrlänge.

Vorzugsweise weist das Schäl- und Schneidwerkzeug einen entsprechenden Endanschlag auf, der die vordefinierte Rohrlänge und somit die Endposition vorgibt.

Es hat sich als vorteilhaft erwiesen, wenn der Endanschlag durch die Trenneinheit gebildet wird, da diese entsprechend des Rohrdurchmessers auszuwählen und am Schäl- und Schneidwerkzeug vorzusehen ist und die vordefinierte Rohrlänge, welche abzuisolieren ist, dem entsprechenden Rohrdurchmesser zuordenbar ist. Somit weist die entsprechende Trenneinheit die benötigte Breite sowie die dem Durchmesser des Rohres entsprechenden Klingenlänge auf. Durch diese Abstimmung der Trenneinheit mit einer vordefinierten Länge der Absioliertiefe in Bezug auf den Rohrdurchmesser können Fehler vermieden werden wie auch separate Messungen wegfallen.

Daraufhin ist die abgetrennte Isolationsschicht vom Mediumsrohr zu entfernen. Das Schäl- und Schneidwerkzeug befindet sich vorzugsweise währenddessen in der Endposition, das heisst, durch das Abtrennen der Isolationsschicht von der Mantelfläche des Mediumsrohres wurde das Schäl- und Schneidwerkzeug mittels Führungseinheit, wobei die Führungseinheit vorzugsweise als Spindel ausgebildet ist, auf die vordefinierte Rohrlänge in die Endposition gefahren.

Nach dem Entfernen der Isolationsschicht erfolgt der Schälvorgang des Mediumsrohrs bzw. dessen äusserer Mantelfläche, dazu dient die am Schäl- und Schneidwerkzeug angeordnete Schäleinheit. Der Schälvorgang dient hauptsächlich dazu die Oxidschicht der Mantelfläche des Mediumsrohres zu entfernen um danach eine gute Oberflächenqualität der Aussenmantelfläche zu gewährleisten, die für die weitere Anwendung wie z. B einem Verschweissen mittels Elektroschweissfitting entscheidend ist.

Vorzugsweise ist die Schäleinheit am Trägerarm angeordnet und mit der Schneidvorrichtung austauschbar.

Der Schälvorgang der Aussenmantelfläche des Mediumsrohres erfolgt in derselben oder in der entgegengesetzten Rotations- und Steigungsrichtung des Abtrennvorgangs, ausgehend von der Endposition der vorgegebenen Rohrlänge oder der Stirnseite des Rohres.

Vorteilhaft ist es wenn der Radialschnitt bzw. der parallel zur Rohrachse verlaufenden Schnitt mit derselben Schneidvorrichtung umgesetzt wird, wie die mit der die entlang des Umfangs des Mantelrohres verlaufende Durchtrennung erfolgt, wobei vorzugsweise die Schneidvorrichtung nach dem parallel zur Rohrachse verlaufenden Auftrennen um einen Drehpunkt um 90° gedreht wird um das Durchtrennen entlang des Umfangs durchzuführen.

Vorzugsweise weist die Schneidvorrichtung zur Gewährleistung der 90° Drehung ein Gelenk auf, das es ermöglicht, dass die Schneide des Schneidwerkzeugs um 90° gedreht wird. Dies ermöglicht die Durchführung des Radialschnitts des Mantelrohres wie auch das Durchtrennen entlang des Umfangs des Mantelrohres mit demselben Schneidwerkzeug sowie derselben Schneidvorrichtung.

Die Spann- und Führungseinheit verbleibt während des kompletten Abisoliervorgangs am Rohrende bzw. am Innendurchmesser des Mediumsrohres, wohingegen der Rest des Schäl- und Schneidwerkzeugs zum Umbau wie auch zum besseren Erreichen der zu entfernenden Rohrschicht zwischen dem Durchtrennvorgang und dem Abtrennvorgang von der Führungseinheit entfernt werden kann. Es besteht auch die Möglichkeit den Trägerarm an der Führungseinheit zu belassen und nur die Schäleinheit oder Schneidvorrichtung vom Trägerarm zu entfernen oder bei entsprechendem Verfahrensschritt am Trägerarm zu montieren sowie die Klinge der Trenneinheit nur beim Trennvorgang an der Trenneinheit angeordnet ist.

Gemäss einer bevorzugten Ausführungsform kann die Trenneinheit wahlweise mit dem Trägerarm drehfest verbunden oder der Trägerarm gegenüber der Trenneinheit drehbar angeordnet bzw. gelagert sein, entsprechend des durchzuführenden Bearbeitungsschritts. Wie bereits erwähnt ist die Trenneinheit vorzugsweise auf einer Führungshülse angeordnet, wobei auf dieser Führungshülse ebenfalls vorzugsweise die Lagerung des Trägerarms angeordnet ist. Dadurch, dass der Trägerarm auf einer Lagerung angeordnet ist kann er wahlweise mit der Führungshülse starr verbunden werden indem die Lagerung bzw. deren Rotationsfunktion unterdrückt oder die Lagerung frei gestellt wird bzw. die Rotationsfunktion zugelassen wird, damit der Trägerarm mittels der Lagerung um die Führungshülse rotierbar ist.

Die gewünschte Funktion des Trägerarms ist abhängig davon welcher Verfahrensschritt gerade auszuführen ist. Das heisst, beim Radialschnitt bzw. dem parallel zur Rohrachse erfolgenden Auftrennen ist der Trägerarm bzw. die Lagerung frei bzw. nicht blockiert auch wenn keine Rotation in diesem Verfahrensschritt stattfindet dient die Spindel mit der Führungshülse als lineare Führung da die Führungshülse auf dem Aussendurchmesser der Spindel aufliegt bis die axiale Endposition erreicht ist. Um das Durchtrennen des Mantelrohres entlang des Umfangs zu ermöglichen bleibt die Lagerung freigeschaltet bzw. die Verrasterung gelöst wodurch der Trägerarm um die Führungshülse rotierbar ist.

Als vorteilhaft hat sich auch gezeigt, wenn die Schäleinheit am Trägerarm mit der Schneidvorrichtung austauschbar ist und der Austausch stattfindet wenn der Trägerarm nicht an der Führungseinheit angeordnet ist, wobei der Austausch auch stattfinden kann während der Trägerarm an der Führungseinheit befestigt ist.

Vorzugsweise wird die Schneideinheit vom Trägerarm demontiert um das Mantelrohr zu entfernen und den Abtrennvorgang mittels Trenneinheit zwischen Mantelaussenfläche des Mediumrohrs und Isolationsschicht durchzuführen. Wie bereits zuvor erwähnt wird dies dadurch erreicht, dass der Trägerarm drehfest mit der Führungshülse verbunden ist indem die Lagerung mittels Feststellmittel unterdrückt wird und dadurch die ebenfalls auf der Führungshülse angeordnete Trenneinheit mitgedreht wird wenn der Trägerarm manuell betätigt bzw. um die Führungseinheit rotiert wird. Selbstverständlich könnte die Schäleinheit bereits am Trägerarm montiert sein bei diesem Schritt aber aufgrund der leichteren Betätigung wird diese vorzugsweise erst nach dem Abtrennvorgang auf dem Trägerarm befestigt. Die Trenneinheit weist zum Abtrennen der Isolationsschicht eine Klinge auf, welche auf die Trenneinheit aufgesteckt und leicht wieder entfernt werden kann, damit die Trenneinheit selbst am Schäl-und Schneidwerkzeug verbleiben kann da sie auch als Endanschlag dient, jedoch die Klinge in den anderen Verfahrensschritten nicht benötigt wird.

Um die Steigung der Führungseinheit bzw. Spindel auf die Führungshülse zu übertragen und auch auf die Trenneinheit, ragt in die Führungshülse ein Gewindesegment hinein das in einem Feststellring angeordnet ist, welcher die Führungshülse umgibt und das Spannen und Lösen des Gewindesegments durch die innere Formgebung eines Exzenters ermöglicht wird. Wird das Gewindesegment mittels des Exzenters durch die Führungshülse an die Spindel gedrückt, greift das Gewindesegment mit der Spindel, wodurch ein Vorschub bzw. eine lineare Verschiebung der Trenneinheit sowie des Trägerarms bzw. des Schäl- und Schneidwerkzeugs umgesetzt wird, wenn der Trägerarm rotiert wird. Wird der Feststellring durch Drehen und somit auch Drehen des Exzenters bzw. der exzentrischen Aussparung gelöst, verschiebt sich das Gewindesegment wieder nach aussen bzw. Federn drücken es nach aussen und das Gewindesegment greift nicht mehr mit der Spindel und es kann keine Vorschubbewegung aufgrund der Gewindesteigung mehr stattfinden.

Vorzugsweise dient die Trenneinheit bzw. die Breite der Trenneinheit auch hier, wie bereits während der Durchtrennvorgangs, als Endanschlag für die gewünschte Rohrlänge die es abzuisolieren bedarf.

Das erfindungsgemässe Schäl- und Schneidwerkzeug zum Abisolieren und Schälen von vorisolierten Rohrenden beinhaltend eine Spanneinheit zur zentrischen Aufnahme des Mediumsrohrendes, eine Führungseinheit, wobei die Führungseinheit als Spindel ausgebildet ist und der Vorschubbewegung während des Abtrenn- und Schälvorgangs dient und wobei die Führungseinheit koaxial vor der Spanneinheit angeordnet ist. Zudem weist das Schäl- und Schneidwerkzeug einen Trägerarm auf, wobei der Trägerarm mittels einer Lagerung auf einer Führungshülse gelagert ist und wobei die Führungshülse auf der Führungseinheit angeordnet ist. Das Schäl- und Schneidwerkzeug weist ebenfalls eine Trenneinheit auf, welche dem Abtrennen der Isolationsschicht von der Aussenmantelfläche des Mediumsrohres dient sowie eine Schneidvorrichtung, die dem Durchtrennen des Mantelrohres sowie dem Einschneiden der Isolationsschicht dient und eine Schäleinheit, welche für das abschliessende Schälen und entfernen der Oxidschicht der äusseren Mantelfläche des Mediumsrohres eingesetzt wird. Die Schneidvorrichtung und die Schäleinheit sind gegeneinander am Trägerarm austauschbar angeordnet. In der Führungshülse, welche auf der Spindel angeordnet ist, ist ein Gewindesegment verstellbar angeordnet, welches entsprechend seiner Position mit der Spindel greift und einen Vorschub bewirkt oder nicht greift. Wie bereits erwähnt bedarf es bezüglich den unterschiedlichen Verfahrensschritten während des Abisolierverfahrens unterschiedliche Einstellungen des Trägerarms und dessen Lagerung sowie auch der Führungshülse. Das heisst, dass das in der Führungshülse angeordnete Gewindesegment in der einen Stellung mit der Spindel greift und dadurch als Führung mit axialem Vorschub während des Abtrennvorgangs wie auch während des Schälvorgangs eingesetzt wird. Wenn das Gewindesegment nicht mit der Spindel greift und die Führungshülse sowie das komplette Schäl- und Schneidwerkzeug keine axiale Bewegung erfährt, dient diese Einstellung bzw. Anordnung des Gewindesegments in der Führungshülse dem Durchtrennvorgang da dort kein Vorschub benötigt wird aber dennoch eine Rotationsbewegung mit dem Trägerarm durchgeführt wird. Um diese zu ermöglichen wird wie bereits erwähnt die Lagerung des Trägerarms mittels des Feststellmittels auf frei gestellt, so dass damit der Trägerarm um die Führungshülse rotieren kann. Trotzdessen dass keine Vorschubbewegung benötigt wird, wird bei diesem Verfahrensschritt das Gewindesegment vorzugsweise doch mittels des Feststellrings auf die Spindel gedrückt um mit Hilfe des Endanschlags eine Verspannung der Führungshülse zu erreichen wodurch die Führungshülse axial und radial fixiert wird. Beim zuvor auszuführenden Radialschnitt, der parallel zur Rohrachse verläuft, zum Auftrennen des Mantelrohres und gleichzeitigen Einschneiden der Isolation, ist jedoch das

Gewindesegment nicht im Eingriff mit der Spindel, wodurch eine axiale Verschiebung des Trägerarms entlang der Spindel, die dann als lineare Führung der Führungshülse dient, erfolgt.

Ein Ausführungsbeispiel der Erfindung wird anhand der Figuren beschrieben, wobei sich die Erfindung nicht nur auf das Ausführungsbeispiel beschränkt. Es zeigen:
Fig. 1 eine Frontansicht eines erfindungsgemässen Schäl- und Schneidwerkzeugs mit eingespannter Schneidvorrichtung,
Fig. 2 eine Seitenansicht eines erfindungsgemässen Schäl- und Schneidwerkzeugs mit eingespannter Schneidvorrichtung,
Fig. 3 eine Draufsicht einer Schneidvorrichtung,
Fig. 4 eine Frontansicht eines erfindungsgemässen Schäl- und Schneidwerkzeugs mit eingespannter Schäleinheit,

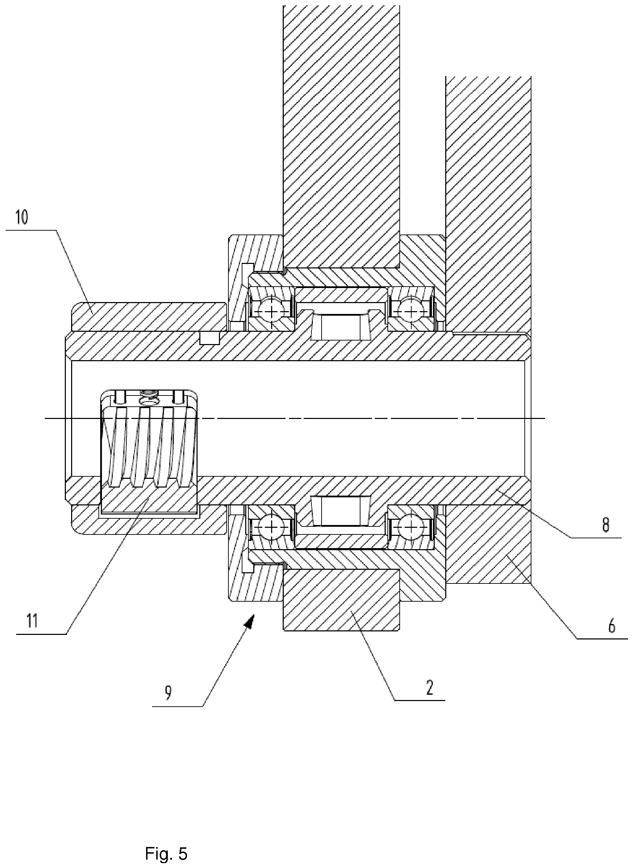

Fig. 5 einen Längsschnitt durch die Lagerung des Trägerarms,
Fig. 6 einen Querschnitt durch den Feststellring und
Fig. 7 einen Querschnitt durch den Trägerarm.

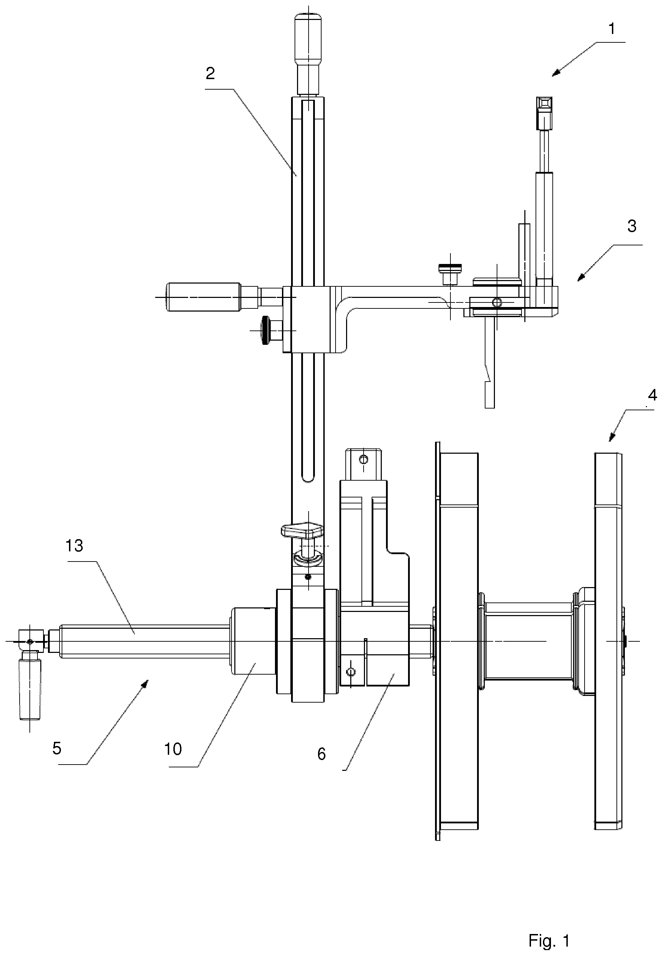

Die in Fig. 1 dargestellte Zeichnung zeigt eine Frontansicht eines erfindungsgemässen Schäl- und Schneidwerkzeugs 1 zum Abisolieren und Schälen von vorisolierten Rohrenden. Die Spanneinheit 4 dient dem Festspannen des Schäl-und Schneidwerkzeugs 1 am Innendurchmesser des Mediumsrohres. Die Spanneinheit 4 ermöglicht eine zentrische Aufnahme des Mediumsrohres was beim Schälen der Aussenmantelfläche und entfernen der Oxidschicht des Mediumsrohres zum Schluss des Abisoliervorgangs wesentlich ist um an allen Stellen eine geschälte Oberfläche zu gewährleisten.

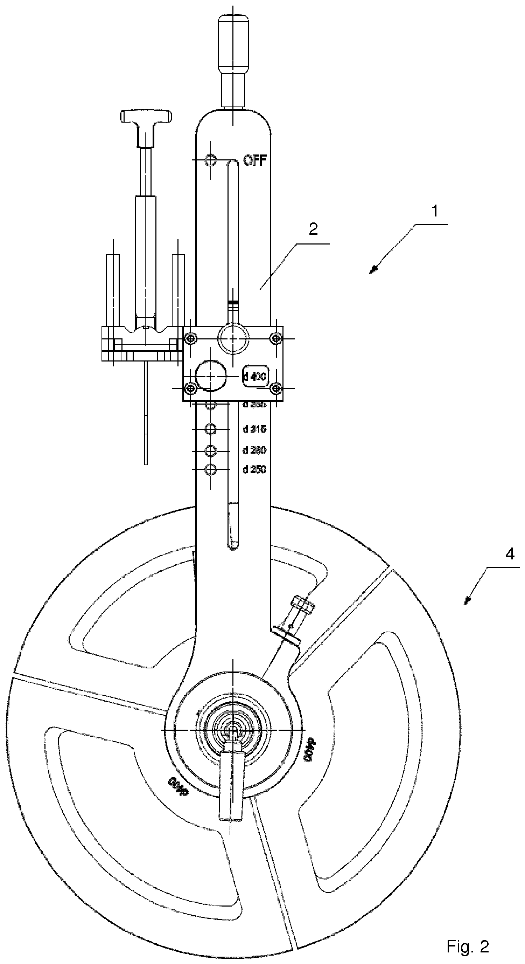

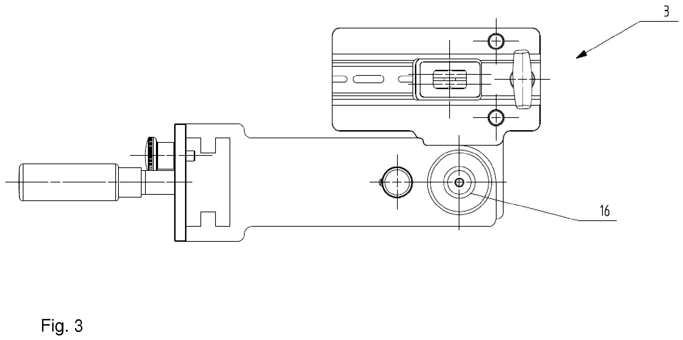

Koaxial vor der Spanneinheit 4 ist die Führungseinheit 5 angeordnet, diese ist mit der Spanneinheit 4 fest verbunden und dient der Führung des Schäl- und Schneidwerkzeugs 1 bzw. des Trägerarms 2 und den dazugehörigen Vorrichtungen 3 und Einheiten 6, 7. Mittels Spanneinheit 4 wird erst das Schäl- und Schneidwerkzeug 1 am Mediumsrohrinnendurchmesser befestigt, vorzugsweise wird nur die Spanneinheit 4 mit der daran angeordneten Führungseinheit 5 am Rohrende befestigt und anschliessend der Trägerarm 2 mit Lagerung 9, Führungshülse 8 sowie der Trenneinheit 6 und vorzugsweise der Schneidvorrichtung 3 aufgeschoben. Die Führungshülse 8 wird entlang der Spindel 13 geführt. Vorzugsweise wird zuerst ein Radialschnitt, der parallel zur Rohrachse verläuft, in das Rohrende eingebracht, vorzugsweise mittels der Schneidvorrichtung 3, wobei dies auch als separater Schnitt mit einem anderen Werkzeug durchgeführt werden könnte. Bei erreichter vordefinierter Rohrlänge die abzuisolieren ist, wird die Schneidvorrichtung 3 neu ausgerichtet, das heisst, 90° um einen Drehpunkt gedreht. Vorzugsweise wird dies mittels eines Gelenks 16 erreicht, wodurch die Schneidvorrichtung 3 schwenkbar ist, was aus Fig. 3 gut erkennbar ist. Die vordefinierte Rohrlänge wird durch einen Endanschlag gebildet, wodurch kein Abmessen der abzuisolierenden Länge notwendig ist. Vorzugsweise wird die Trenneinheit 6 als Endanschlag verwendet die bei erreichter Länge an der Spanneinheit 4 anschlägt. Mittels der Schneidvorrichtung 3 wird dann das Mantelrohr, welches die Isolationsschicht umgibt durchtrennt wie auch die Isolationsschicht eingeschnitten. Das Durchtrennen erfolgt wenn das Schäl-und Schneidwerkezug 1 auf Endposition steht entlang des Rohrumfangs. Dazu wird das Werkzeug 1 mittels Feststellring 10, der das Gewindesegment 11 auf die Spindel 13 drückt und durch das Anstehen des Endanschlags stirnseitig an der Spanneinheit, verspannt. Das Feststellmittel 13 wird derart eingestellt, dass die Lagerung 9 frei ist und der Trägerarm 2 mit der daran angeordneten Schneidvorrichtung 3 rotierbar ist. Nach einer vollen Umdrehung wird vorzugsweise der Trägerarm 2 mit der daran angeordneten Schneidvorrichtung 3 von der Führungseinheit 5 entfernt um anschliessend das Mantelrohr, welches komplett durchtrennt ist, von der Isolationsschicht zu lösen, wobei das Werkzeug auch an der Führungseinheit 5 verbleiben kann um das Mantelrohr zu entfernen. Fig. 2 zeigt das erfindungsgemässe Werkzeug 1, bei welchem die Einstellung am Trägerarm 2 der Vorrichtungen und Einheiten anhand der zu bearbeitenden Rohrdurchmessers gut zu erkennen ist.

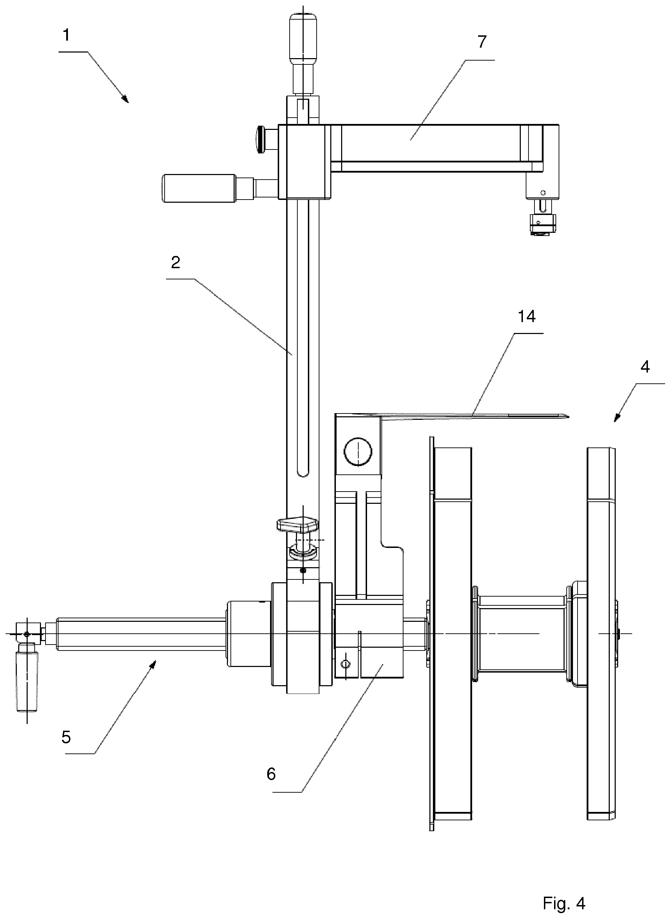

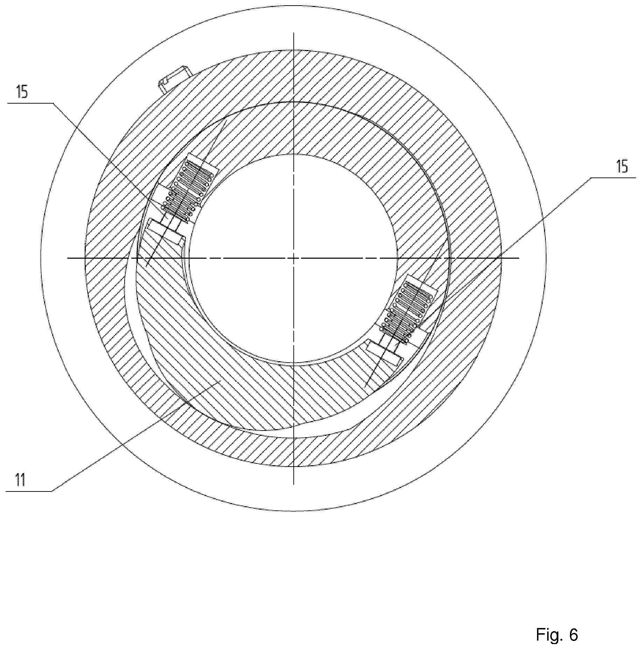

Vorzugsweise wird die Schneidvorrichtung 3 durch die Schäleinheit 7 ausgewechselt wenn der Trägerarm 2 bzw. das Schäl- und Schneidwerkzeug 1 nicht auf der Führungseinheit 5 angeordnet ist, wobei auch ein Auswechseln möglich ist wenn das Werkzeug 1 auf der Führungseinheit 5 montiert ist. Fig. 4 zeigt das Schäl- und Schneidwerkzeug 1 mit der am Trägerarm 2 angeordneten Schäleinheit 7, die mit der Schneidvorrichtung 3 ausgewechselt wurde. Zudem wurde auf die Trenneinheit 6 die Klinge 14 aufgesetzt um das Abtrennen der Isolationsschicht vom Mediumsrohr auszuführen. Zum Abtrennen der Isolationsschicht von der äusseren Mantelfläche des Mediumsrohres wird durch die Drehung des Feststellrings 10 und den darin angeordneten Exzenter bzw. die als Exzenter ausgebildete Aussparung das Gewindesegment 11 an die Spindel 13 gedrückt gegen die Federn 15 bzw. Federkraft, die ansonsten das Gewindesegment 11 nach aussen pressen, ersichtlich in Fig. 6. Damit wird erreicht, dass das Gewindesegment 11 mit der Spindel 13 greift und beim Rotieren der Führungshülse 8 bzw. des Trägerarms 2, der über das Feststellmittel 12 fest mit der Führungshülse 8 verbunden ist, eine Vorschubbewegung umgesetzt wird. Dadurch verschiebt sich das Schäl- und Schneidwerkzeug 1 entlang der Spindel 13, wodurch die an der Trenneinheit 6 angeordnete Klinge 14 stirnseitseitig zwischen Mantelaussenfläche des Meduimsrohres und Isolationsschicht einsticht und durch die steigende Rotationsbewegung der Trenneinheit sowie des Schäl- und Schneidwerkzeugs entlang der vorgegebenen Rohrlänge das Isolationsmaterial vom Mediumsrohr abtrennt. Bei erreichter Endposition wird die Isolationsschicht vom Mediumsrohr entfernt. Da die äussere Mantelfläche des Mediumsrohres für die weitere Verwendung wie z. B. ein Verschweissen oder Kleben noch geschält und die Oxidschicht entfernt werden muss wurde am Trägerarm 2 bereits vorab die Schäleinheit 7 befestigt, wobei die Schäleinheit 7 auch erst nach dem Abtrennen der Isolationsschicht am Trägerarm 2 befestigt werden kann, dies erleichtert die Rotation der Trenneinheit 6 während des Trennvorgangs. Das Schälen der äusseren Mantelfläche des Mediumsrohres wird mittels einer am Trägerarm 2 angeordneten Schäleinheit 7 umgesetzt, wobei der Schälvorgang in derselben wie auch in entgegengesetzter Rotations- und Vorschubrichtung bzw. Steigungsrichtung zum Abtrennvorgang durchgeführt werden kann.

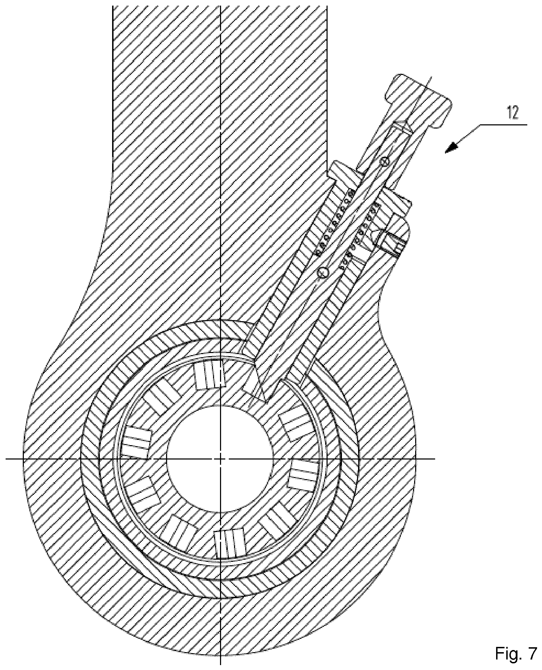

Um die Rotation des Trägerarms 2 vor allem während des Abtrennvorgangs zu erleichtern, weist das Schäl- und Schneidwerkzeug eine Ratschenfunktion auf wodurch der Trägerarm 2 stufenweise gedreht werden kann. Fig. 7 zeigt einen Querschnitt durch das Feststellmittel 12, welches einerseits das Verriegeln der Lagerung 9 mit dem Trägerarm 2 ermöglicht, wie auch das freischalten der Lagerung 9 damit der Trägerarm 2 frei um die Führungshülse drehbar ist. Zudem aber ermöglichen die Vertiefungen entlang des Umfangs der Führungshülse 8 und durch die Federung des Feststellmittels 12 eine Ratschfunktion die bei hohem Kraftaufwand unterstützen soll.

### Bezugszeichenliste

- 1: Schäl- und Schneidwerkzeug
- 2: Trägerarm
- 3: Schneidvorrichtung
- 4: Spanneinheit
- 5: Führungseinheit
- 6: Trenneinheit
- 7: Schäleinheit
- 8: Führungshülse
- 9: Lagerung
- 10: Feststellring
- 11: Gewindesegment
- 12: Feststellmittel
- 13: Spindel
- 14: Klinge
- 15: Federn
- 16: Gelenk

## Patentansprüche

1. Verfahren zum Abisolieren und Schälen von vorisolierten Rohrenden mittels eines Schäl- und Schneidwerkzeugs (1) gemäss Anspruch 7 oder 8, wobei das Verfahren folgende Schritte aufweist:
• festspannen des Schäl- und Schneidwerkzeugs (1) mittels Spanneinheit (4) am Innendurchmesser des Mediumsrohres,
• durchtrennen des Mantelrohres entlang dessen Aussenumfangs und gleichzeitiges einschneiden der Isolationsschicht mittels der an dem Trägerarm (2) angeordneten Schneidvorrichtung (3), wobei der Trägerarm (2) um die koaxial zur Spanneinheit (4) angeordnete Führungseinheit (5) rotiert wird,
• entfernen des Mantelrohres,
• abtrennen der Isolationsschicht von der äusseren Mantelfläche des Mediumsrohres mittels der Trenneinheit (6), wobei das Abtrennen durch eine steigende Rotationsbewegung der Trenneinheit (6) um die Führungsachse bzw. Rohrachse erzeugt wird, ausgehend der Rohrstirnseite bis hin zu einer vorgegebenen Rohrlänge bzw. Endposition,
• entfernen der abgetrennten Isolationsschicht vom Mediumsrohr,
• schälen und entfernen der Oxidschicht der Aussenmantelfläche des Mediumsrohres mittels der einer Schäleinheit (7), wobei die Schälung in derselben oder in der entgegengesetzten Rotations- und Steigungsrichtung des Abtrennvorgangs ausgehend von der Endposition der vorgegebenen Rohrlänge oder der Stirnseite des Rohres, erfolgt,
**dadurch gekennzeichnet, dass**
• vor dem Durchtrennen des Mantelrohres entlang des Umfangs, ein Auftrennen des Mantelrohres und Einschneiden der Isolationsschicht parallel zur Rohrachse vorzugsweise ausgehend von der Stirnseite des Rohres bis zu einer vorgegeben Rohrlänge erfolgt.

2. Verfahren nach Anspruch 1, **dadurch gekennzeichnet, dass** der parallel zur Rohrachse verlaufende Einschnitt in das Mantelrohr und die Isolationsschicht mittels derselben Schneidvorrichtung (3) erfolgt wie das Durchtrennen entlang des Umfangs.

3. Verfahren nach Anspruch 2, **dadurch gekennzeichnet, dass** die Schneidvorrichtung (3) nach dem Auftrennen des Mantelrohres und Einschneiden der Isolationsschicht 90° um einen Drehpunkt gedreht wird um das Durchtrennen entlang des Umfangs durchzuführen.

4. Verfahren nach Anspruch 1, **dadurch gekennzeichnet, dass** die Trenneinheit (6) wahlweise mit dem Trägerarm (2) drehfest verbunden ist und miteinander um die Achse der Führungseinheit (5) rotiert wird oder die Trenneinheit (6) gegenüber dem Trägerarm (2) drehbar um die Achse der Führungseinheit (5) gelagert ist und die Trenneinheit (6) beim Rotieren des Trägerarms (2) nicht mitrotiert wird, wobei die Einstellung der Trenneinheit (6) mit dem Trägerarm (2) entsprechend des durchzuführenden Bearbeitungsschritts gewählt wird.

5. Verfahren nach Anspruch 1 bis 4, **dadurch gekennzeichnet, dass** die Spanneinheit (4) mit der davor koaxial angeordneten Führungseinheit (5) während des kompletten Abisoliervorgangs nicht vom Mediumsrohr gelöst wird bzw. am Mediumsrohr verbleibt.

6. Verfahren nach einem der vorangehenden Ansprüche, **dadurch gekennzeichnet, dass** die am Trägerarm (2) angeordnete Schneidvorrichtung (3) durch die Schäleinheit (7) ausgetauscht wird.

7. Schäl- und Schneidwerkzeug (1) zum Abisolieren und Schälen von vorisolierten Rohrenden beinhaltend eine Spanneinheit (4) zur zentrischen Aufnahme des Mediumsrohrendes, eine Führungseinheit (5), wobei die Führungseinheit (5) als Spindel (13) ausgebildet ist und der Vorschubbewegung während des Abtrenn- und Schälvorgangs dient, wobei die Führungseinheit (5) koaxial vor der Spanneinheit (4) angeordnet ist, einen Trägerarm (2), eine Lagerung (9), eine Führungshülse (8), wobei der Trägerarm (2) mittels der Lagerung (9) auf der Führungshülse (8) gelagert ist, wobei die Führungshülse (8) auf der Führungseinheit (5) angeordnet ist, eine Trenneinheit (6), eine Schneidvorrichtung (3) und eine Schäleinheit (7), wobei die Schneidvorrichtung (3) und die Schäleinheit (7) gegeneinander am Trägerarm (2) austauschbar angeordnet sind, **dadurch gekennzeichnet, dass** in der Führungshülse (8) ein Gewindesegment (11) verstellbar angeordnet ist, welches entsprechend seiner Position mit der Spindel (13) greift und einen Vorschub bewirkt oder nicht greift.

8. Schäl- und Schneidevorrichtung (1) nach Anspruch 7, **dadurch gekennzeichnet dass** das Gewindesegment (11) in einem Feststellring (12) angeordnet ist, wobei der Feststellring (12) eine exzentrischen Aussparung aufweist mittels der das Gewindesegment (11) in die entsprechende Position gebracht werden kann.

## Claims

1. Method for stripping the insulation from and peeling pre-insulated pipe ends by means of a peeling and cutting tool (1) according to Claim 7 or 8, wherein the method has the following steps:
• clamping the peeling and cutting tool (1) on the inside diameter of the medium-carrying pipe by means of a clamping unit (4),
• severing the jacket pipe along the outer circumference thereof and simultaneously cutting into the insulating layer by means of the cutting device (3) arranged on the support arm (2), wherein the support arm (2) is rotated about the guide unit (5) arranged coaxially with the clamping unit (4),
• removing the jacket pipe,
• separating the insulating layer from the outer circumferential surface of the medium-carrying pipe by means of the separating unit (6), wherein the separation is produced by a rising rotary motion of the separating unit (6) about the guide axis or pipe axis, starting from the pipe end face and proceeding as far as a predetermined pipe length or end position,
• removing the separated insulating layer from the medium-carrying pipe,
• peeling and removing the oxide layer of the outer circumferential surface of the medium-carrying pipe by means of the peeling unit (7), wherein peeling takes place in the same or in the opposite direction of rotation and rising as/from the separating process, starting from the end position of the predetermined pipe length or the end face of the pipe,
**characterized in that**,
• before the jacket pipe is severed along the circumference, the jacket pipe is cut open and the insulating layer is cut into parallel to the pipe axis, preferably starting from the end face of the pipe and proceeding as far as a predetermined pipe length.

2. Method according to Claim 1, **characterized in that** the cut in the jacket pipe and the insulating layer, which cut extends parallel to the pipe axis, is performed by means of the same cutting device (3) as the severing cut along the circumference.

3. Method according to Claim 2, **characterized in that**, after cutting open the jacket pipe and cutting into the insulating layer, the cutting device (3) is rotated by 90° about a centre of rotation in order to perform the severing cut along the circumference.

4. Method according to Claim 1, **characterized in that** the separating unit (6) is optionally connected for conjoint rotation to the support arm (2) and is rotated jointly about the axis of the guide unit (5), or the separating unit (6) is mounted in such a way as to be rotatable relative to the support arm (2) about the axis of the guide unit (5), and the separating unit (6) is not simultaneously rotated as the support arm (2) is rotated, wherein the setting of the separating unit (6) with the support arm (2) is chosen in accordance with the processing step to be carried out.

5. Method according to Claim 1 to 4, **characterized in that** the clamping unit (4), together with the guide unit (5) arranged coaxially in front of said unit, is not detached from the medium-carrying pipe, or remains on the medium-carrying pipe, during the entire insulation stripping process.

6. Method according to one of the preceding claims, **characterized in that** the cutting device (3) arranged on the support arm (2) is replaced by the peeling unit (7).

7. Peeling and cutting tool (1) for stripping the insulation from and peeling pre-insulated pipe ends, comprising a clamping unit (4) for the central holding of the medium-carrying pipe end, a guide unit (5), wherein the guide unit (5) is designed as a spindle (13) and serves to provide the feed motion during the separating and peeling process, wherein the guide unit (5) is arranged coaxially in front of the clamping unit (4), further comprising a support arm (2), a bearing assembly (9), a guide sleeve (8), wherein the support arm (2) is mounted on the guide sleeve (8) by means of the bearing assembly (9), wherein the guide sleeve (8) is arranged on the guide unit (5), further comprising a separating unit (6), a cutting device (3) and a peeling unit (7), wherein the cutting device (3) and the peeling unit (7) are arranged interchangeably on the support arm (2), **characterized in that** a threaded segment (11) is arranged adjustably in the guide sleeve (8), said segment engaging with the spindle (13) and bringing about a feed motion or not engaging, depending on its position.

8. Peeling and cutting device (1) according to Claim 7, **characterized in that** the threaded segment (11) is arranged in a fixing ring (10), wherein the fixing ring (10) has an eccentric recess, by means of which the threaded segment (11) can be brought into the corresponding position.

## Revendications

1. Procédé de dénudage et de décolletage d'extrémités de tube pré-isolées à l'aide d'un outil de décolletage et de coupe (1) selon la revendication 7 ou 8, le procédé comprenant les étapes suivantes :
• serrer l'outil de décolletage et de coupe (1) à l'aide d'une unité de serrage (4) sur le diamètre intérieur du tube de milieu,
• sectionner le tube d'enveloppe le long de sa circonférence extérieure et inciser simultanément la couche d'isolation à l'aide du dispositif de coupe (3) disposé sur le bras de support (2), le bras de support (2) tournant autour de l'unité de guidage (5) disposée coaxialement à l'unité de serrage (4),
• retirer le tube d'enveloppe,
• séparer la couche d'isolation de la surface d'enveloppe extérieure du tube de milieu à l'aide de l'unité de séparation (6), la séparation étant générée par un mouvement de rotation croissant de l'unité de séparation (6) sur l'axe de guidage ou l'axe de tube, depuis le côté frontal du tube jusqu'à une longueur de tube ou une position d'extrémité spécifiée,
• retirer la couche d'isolation séparée du tube de milieu,
• décolleter et retirer la couche d'oxyde de la surface d'enveloppe extérieure du tube de milieu à l'aide de l'unité de décolletage (7), le décolletage étant effectué dans le même sens de rotation et de croissance du processus de séparation, ou dans le sens opposé de celui-ci, depuis la position d'extrémité de la longueur de tube spécifiée ou du côté frontal du tube,
**caractérisé en ce que**
• avant de sectionner le tube d'enveloppe le long de la circonférence, le tube d'enveloppe est ouvert et la couche d'isolation est incisée parallèlement à l'axe de tube, de préférence depuis le côté frontal du tube jusqu'à une longueur de tube spécifiée.

2. Procédé selon la revendication 1, **caractérisé en ce que** l'incision du tube d'enveloppe et de la couche d'isolation, laquelle incision s'étend parallèlement à l'axe du tube, est effectuée à l'aide du même dispositif de coupe (3) que pour le sectionnement le long de la circonférence.

3. Procédé selon la revendication 2, **caractérisé en ce que** le dispositif de coupe (3) est tourné de 90° autour d'un point de pivotement après ouverture du tube d'enveloppe et incision de la couche d'isolation afin d'effectuer le sectionnement le long de la circonférence.

4. Procédé selon la revendication 1, **caractérisé en ce que** l'unité de séparation (6) est éventuellement reliée solidairement en rotation au bras de support (2) et tourne conjointement avec celui-ci sur l'axe de l'unité de guidage (5) ou l'unité de séparation (6) est montée par rapport au bras de support (2) de manière à pouvoir tourner sur l'axe de l'unité de guidage (5) et, lorsque le bras de support (2) tourne, l'unité de séparation (6) ne tourne pas avec celui-ci, le réglage de l'unité de séparation (6) avec le bras de support (2) étant sélectionné en fonction de l'étape de traitement à effectuer.

5. Procédé selon les revendications 1 à 4, **caractérisé en ce que** l'unité de serrage (4), pourvue de l'unité de guidage (5) disposée coaxialement devant celle-ci, n'est pas détachée du tube de milieu, ou reste sur le tube de support, pendant le processus de dénudage complet.

6. Procédé selon l'une des revendications précédentes, **caractérisé en ce que** le dispositif de coupe (3) disposé sur le bras de support (2) est remplacé par l'unité de décolletage (7).

7. Outil de décolletage et de coupe (1) destiné à dénuder et décolleter des extrémités de tube pré-isolées, ledit outil comprenant une unité de serrage (4) destinée à recevoir centralement l'extrémité de tube de milieu, une unité de guidage (5), l'unité de guidage (5) étant conçue comme une broche (13) et étant utilisée pour le mouvement d'avance pendant le processus de séparation et de décolletage, l'unité de guidage (5) étant disposée coaxialement devant l'unité de serrage (4), un bras de support (2), un palier (9), un manchon de guidage (8), le bras de support (2) étant monté sur le manchon de guidage (8) à l'aide du palier (9), le manchon de guidage (8) étant disposé sur l'unité de guidage (5), une unité de séparation (6), un dispositif de coupe (3) et une unité de décolletage (7), le dispositif de coupe (3) et l'unité de décolletage (7) étant disposés de manière interchangeable sur le bras de support (2), **caractérisé en ce qu'**un segment fileté (11) est disposé de manière réglable dans le manchon de guidage (8),
qui, selon sa position, s'engage avec la broche (13) et provoque une avance ou ne s'engage pas.

8. Dispositif de décolletage et de coupe (1) selon la revendication 7, **caractérisé en ce que** le segment fileté (11) est disposé dans une bague d'immobilisation (12), la bague d'immobilisation (12) comportant un évidement excentrique à l'aide duquel le segment fileté (11) peut être amené dans la position correspondante.
